# EUROPÄISCHE PATENTSCHRIFT

(11) **EP 2 159 149 B1**
(45) Veröffentlichungstag und Bekanntmachung des Hinweises auf die Patenterteilung: **23.02.2011**
(21) Anmeldenummer: 09165896.3
(22) Anmeldetag: 20.07.2009
(51) Int. Cl.: B62K 19/30

(54) **Fahrrad-Rahmenrohr**
Bicycle frame tube
Tube de cadre de bicyclette

(30) Priorität: 02.09.2008 DE 202008011658 U
(43) Veröffentlichungstag der Anmeldung: 03.03.2010
(73) Patentinhaber: Canyon Bicycles GmbH, 56073 Koblenz (DE)
(72) Erfinder: Thoma, Vincenz, 56068 Koblenz (DE)
(74) Vertreter: von Kreisler Selting Werner

(56) Entgegenhaltungen:
- US-A- 4 768 798
- US-A- 5 433 465
- US-A- 5 478 100
- US-A1- 2006 145 446
- US-B1- 7 114 738

## Beschreibung

Die Erfindung betrifft ein Fahrrad-Rahmenrohr, insbesondere ein Oberrohr oder ein Unterrohr.

Schaltzüge und Bremszüge werden bei Fahrrädern üblicherweise außen am Rahmen, insbesondere an dessen Oberrohr oder Unterrohr über geeignete Halterungen entlanggeführt. Ferner ist es bekannt, die Züge innerhalb des Oberrohrs oder Unterrohrs anzuordnen. Dies hat den Vorteil, dass die Züge besser vor Verschmutzung geschützt sind. Derartige innenliegende Bowdenzüge sind beispielsweise aus US 4,768,798 und US 5,433,465 bekannt. Aus der US 5433465 ist eine Zahrrad-Rahmenrchranordnung mit den Merkmalen des Oberbegriffes des Anspruchs 1 bekannt. Allerdings weist das Anordnen von Zügen innerhalb der Rahmenrohre den Nachteil auf, dass beim Überfahren von Bodenwellen und dergleichen die Züge gegen die Innenseite der Rahmenrohre schlagen, so dass störende Geräusche entstehen.

Bei nicht umhüllten Bereichen, außen an den Rahmenrohren angeordneter Züge, ist es bekannt, Kunststoff- oder Gummiringe vorzusehen, die die Züge in diesem Bereich umgeben und ein Anschlagen der Züge von außen gegen das Rahmenrohr verhindern. Derartige Ringe verrutschen jedoch bisweilen und müssen wieder zurechtgerückt werden. Daher ist ein Vorsehen derartiger den freiliegenden Zug umgebender Ringe im Inneren des Rahmenrohrs nicht möglich. Ferner hätte dies den Nachteil, dass die Einführöffnungen in dem Rahmenrohr, durch die die Züge in das Rahmenrohr eingeführt werden, einen entsprechend größeren Durchmesser aufweisen müssten, um auch die Ringe in das Innere des Rahmenrohrs einführen zu können.

Aufgabe der Erfindung ist es, ein Fahrrad-Rahmenrohr, insbesondere ein Oberrohr oder ein Unterrohr zu schaffen, bei dem auch bei innenliegenden Zügen ein Klappern bzw. Anschlagen der Züge an die Rohrinnenseite vermieden ist.

Die Lösung der Aufgabe erfolgt erfindungsgemäß durch die Merkmale des Anspruchs 1.

Das erfindungsgemäße Fahrrad-Rahmenrohr, bei dem es sich insbesondere um ein Oberrohr und ein Unterrohr handelt, weist mindestens zwei Zug-Einlassöffnungen und zwei Zug-Auslassöffnungen auf. Vorzugsweise sind genau zwei Zug-Einlassöffnungen und zwei Zug-Auslassöffnungen vorgesehen. Die durch das Innere des Rahmenrohrs geführten Züge erstrecken sich von jeweils einer Zug-Einlassöffnung zu einer Zug-Auslassöffnung. Erfindungsgemäß sind die Züge im Rohrinneren gekreuzt. Bevorzugt ist es hierbei, dass die Züge ein einziges Mal gekreuzt sind. Vorzugsweise verläuft ein Zug somit, ausgehend von einer Zug-Einlassöffnung, diagonal zu der schräg gegenüberliegenden Zug-Auslassöffnung. Durch das Kreuzen, der vorzugsweise genau zwei Züge, ist die Gefahr des Schwingens der Züge und des hierdurch hervorgerufenen Anschlagens der Züge an der Innenseite des Rahmenrohrs verringert.

Eine oder beide Zug-Einlassöffnungen können auch am Steuerrohr, insbesondere seitlich oder auf der nach vorne weisenden Seite, angeordnet sein. Bei den Zug-Auslassöffnungen ist es auch möglich, durch Vorsehen von Umlenkelementen, wie einer Umlenkrolle, den Zug in ein Sattelstützrohr oder eine Kettenstrebe umzulenken, so dass eine Zug-Auslassöffnung, insbesondere nahe des Schaltwerks in einer Sattelstrebe oder einer Kettenstrebe angeordnet ist. Entsprechend kann eine Zug-Auslassöffnung, wenn es sich um einen Bremszug handelt, in einer Sattelstrebe nahe der Bremse angeordnet sein.

Besonders bevorzugt ist es, die Züge derart auszuwählen, dass stets einer der beiden Züge im normalen Fahrbetrieb gespannt ist. Dies ist vorteilhaft, da üblicherweise nur die ungespannten Züge zum Anschlagen an die Innenseite des Rahmenrohrs neigen. Bei den Zügen handelt es sich vorzugsweise um die Schalt- und Bremszüge. Besonders bevorzugt ist es, dass der im normalen Fahrbetrieb gespannte Zug derart angeordnet ist, dass es sich um den unteren der beiden sich kreuzenden Züge handelt. Hierdurch kann insbesondere bei hohen Geschwindigkeiten, bei denen die vertikale Beschleunigung der Züge relativ hoch ist, ein Schlagen der Züge vermieden oder zumindest die Häufigkeit des Schlagens verringert werden. Besonders bevorzugt ist es hierbei, dass es sich bei dem unteren der beiden Züge um den Umwerfer-Zug handelt. Der Umwerfer-Zug ist derjenige Zug, durch den der im Bereich des Tretlagers angeordnete Umwerfer verschwenkt wird. Insbesondere bei hohen Geschwindigkeiten, bei dem die Kette auf dem großen bzw. äußeren Kettenblatt angeordnet ist, ist der Umwerfer-Zug stark gespannt. Aufgrund der hohen Spannung des Umwerfer-Zugs, insbesondere in einer derartigen Umwerferstellung kann ein Schlagen des zweiten Zuges, der ggf. geringer oder nicht gespannt ist, vermieden werden. Insbesondere handelt es sich bei dem zweiten Zug um den Schaltwerk-Zug, das heißt denjenigen Zug, der mit dem an der Hinterradnabe angeordneten Schaltwerk verbunden ist. Dieser ist bei hohen Geschwindigkeiten, bei denen sich die Kette auf einem der kleineren Ritzel befindet, nicht oder nur geringfügig gespannt.

Durch das erfindungsgemäße Kreuzen von mindestens zwei Zügen im Rohrinneren kann somit die Häufigkeit des Anschlagens eines Zuges an der Innenseite des Rohrs deutlich reduziert werden.

Vorzugsweise unterscheidet sich der Abstand der Zug-Einlassöffnungen von dem Abstand der Zug-Auslassöffnungen, wobei insbesondere der Abstand der Zulassöffnungen größer ist als derjenige der Zug-Auslassöffnungen. Hierdurch erfolgt ein Kreuzen der beiden Züge nicht in der Mitte zwischen den Öffnungspaaren, sondern nahe des Öffnungspaars mit geringerem Öffnungsabstand. Hierdurch kann die freie Länge der Züge, die schwingen kann, variiert werden.

Die Zug-Einlassöffnungen sind vorzugsweise einander gegenüberliegend an Außenseiten des Oberrohrs oder des Unterrohrs angeordnet. Hierdurch ist ein Verlegen der Züge mit möglichst großen Krümmungsradien möglich. Die Zug-Auslassöffnungen sind vorzugsweise an einer Unterseite des Unterrohrs oder an Außenseiten des Oberrohrs angeordnet. Auch dies ist vorteilhaft, um beim Verlegen der Züge möglichst große Krümmungsradien realisieren zu können.

Besonders bevorzugt ist es, dass einer mit einem linken Bedienelement, insbesondere einem Schalthebel verbundener Zug in Fahrtrichtung in die rechte Zug-Einlassöffnung eingeführt ist. Hierdurch ist eine Führung des Zuges mit möglichst großen Radien möglich. Sofern es sich bei diesem Zug um einen der beiden Schaltzüge handelt, handelt es sich üblicherweise um den Umwerfer-Zug, da der Bedienhebel für den Umwerfer üblicherweise in Fahrtrichtung links am Lenker angeordnet ist. In bevorzugter Ausführungsform handelt es sich somit um den in Fahrtrichtung rechts in die Zug-Einlassöffnung eingeführten Zug um den unteren der beiden Züge. Sofern es sich bei dem zweiten Zug um den Schaltwerk-Zug handelt, ist das entsprechende Bedienelement auf der rechten Seite des Fahrradlenkers angeordnet und der Zug in die in Fahrtrichtung linken Seite angeordneten Zug-Einlassöffnung eingeführt.

Besonders bevorzugt ist es, dass innerhalb des Rahmenrohrs nur die Züge selbst ohne Zughüllen vorgesehen sind. Die Zughüllen der üblicherweise als Bowdenzüge ausgebildeten Schalt- oder Bremszüge enden vorzugsweise an der Zug-Einlassöffnung. Hierzu kann eine Zughüllenaufnahme vorgesehen sein. Bei der Zughüllenaufnahme handelt es sich vorzugsweise um einen zylindrischen Ring, in den die Zughülle eingesteckt werden kann. Hierdurch ist ein seitliches Verrutschen der Zughülle gegenüber der Zug-Einlassöffnung vermieden.

An den Zug-Auslassöffnungen können gegebenenfalls auch Zughüllenaufnahmen vorgesehen sein, so dass der Zug beim Austreten aus dem Rahmenrohr wieder in eine Zughülle eingeführt ist. Ebenso ist es möglich, dass der Zug ohne Umhüllung, beispielsweise unmittelbar zur Hinterradbremse oder zum Schaltungs-Umwerfer geführt ist.

Besonders bevorzugt ist es, dass insbesondere für die Erstmontage im Rahmen Einführröhrchen vorgesehen sind. Die Einführröhrchen laufen hierbei diagonal jeweils von einer Zug-Einlassöffnung zu einer Zug-Auslassöffnung, so dass sich die Einführröhrchen kreuzen. Es ist somit auf einfache Weise möglich, die Züge durch die Zugeinführröhrchen zu führen. Die Zugeinführröhrchen können nach dem Einführen der Züge wieder entfernt werden.

Nachfolgend wird die Erfindung anhand einer bevorzugten Ausführungsform unter Bezugnahme auf die anliegenden Zeichnungen näher erläutert.

Es zeigen:
- Figur 1: eine schematische Ansicht eines Unterrohrs eines Fahrradrahmens von unten und
- Figur 2: eine schematische Schnittansicht entlang der Linie II-II in Figur 1.
Ein Rahmenrohr wie ein Unterrohr 10 ist mit einer Tretlagergehäuse 12 und einem Gabelrohr 14 zur Aufnahme des Gabelschafts verbunden. Das Tretlagergehäuse 12 ist mit zwei Kettenstreben 16 des Hinterbaus verbunden.

An dem in Richtung des Gabelrohrs 14 weisenden Ende des Unterrohrs 10 sind zwei Zug-Einlassöffnungen 18, 20 einander gegenüberliegend angeordnet. Die Zug-Einlassöffnungen 18, 20 sind im Wesentlichen an Außenseiten 22 bzw. nahe der Außenseiten 22 vorgesehen.

An dem anderen Ende des Unterrohrs im Bereich des Tretlagers 12 sind die Zug-Auslassöffnungen 24, 26 vorgesehen.

Ein erster Zug 28 verläuft von der Zug-Einlassöffnung 20 diagonal durch das Rohrinnere des Unterrohrs 10 zu der Zug-Auslassöffnung 26. Der Zug 28 ist vor dem Eintreten in das Rohrinnere mit einer Zughülle 30 umgeben. Nach dem Austreten des Zuges 28, der innerhalb des Rohrinneren keine Umhüllung aufweist, ist der Zug 28 in einem Führungselement 32 geführt. Der Zug 28 dient beispielsweise zum Schalten des Umwerfers an den Kettenblättern.

Der zweite Zug 34 erstreckt sich von der Zug-Einlassöffnung 18 diagonal durch das Rohrinnere zu der Zug-Auslassöffnung 24, so dass sich die Züge 28, 34 in einem Bereich 36 kreuzen. Vor dem Eintritt in die Zug-Einlassöffnung 18 ist der Zug 34 von einer Zughülle 38 umgeben. Nach dem Austritt an der Zug-Auslassöffnung 24 ist der Zug 34 ebenfalls von einer Zughülle 40 umgeben. Innerhalb des Rohrinneren weist der Zug 34 keine Umhüllung auf. Der Zug 34 führt beispielsweise zu dem hinteren Schaltwerk einer Kettenschaltung.

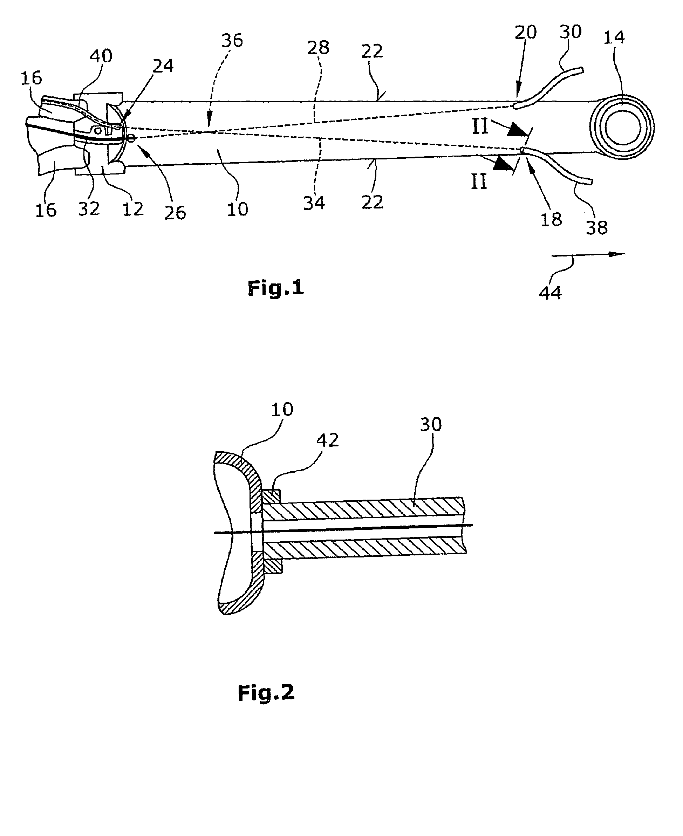

Um eine sichere Aufnahme der Zughüllen 30, 38, 40 zu gewährleisten, ist mit einer Außenseite des Rahmenrohrs 10 eine Zughüllenaufnahme 42 (Figur 2) verbunden. Bei der Zughüllenaufnahme 42 handelt es sich um einen zylindrischen Ring, dessen Innendurchmesser dem Außendurchmesser der Hülle 30 entspricht.

In bevorzugter Ausführungsform handelt es sich bei dem Zug 34 um den Umwerfer-Zug. Der Umwerfer-Zug 34 ist somit in die in Fahrtrichtung 44 rechte Zug-Einlassöffnung 18 eingeführt. Der Zug 34 sowie die Zughülle 38 sind sodann um das Gabelrohr 14 herum zu einem nicht dargestellten, am Lenker befestigten Bedienelement geführt. Das Bedienelement befindet sich sodann auf der in Fahrtrichtung 44 linken Seite des Fahrradlenkers. Vorzugsweise ist der Umwerfer-Zug 34 als unterer Zug im Bereich der Kreuzung 36 angeordnet. Bei dem zweiten Zug 28 handelt es sich in bevorzugter Ausführungsform um den Schaltwerk-Zug. Dieser ist in Fahrtrichtung 44 durch die linke Zug-Einlassöffnung 20 eingeführt. Der Zug 28 sowie die entsprechende Hülle 30 sind um das Gabelrohr 44 herum zu einem in Fahrtrichtung 44 auf der rechten Seite des Lenkers angeordneten Bedienhebel geführt.

## Patentansprüche

1. Fahrrad-Rahmenrohr, insbesondere Oberrohr oder Unterrohr (10), mit
mindestens zwei Zug-Einlassöffnungen (18, 20),
mindestens zwei Zug-Auslassöffnungen (24, 26) und
mindestens zwei sich jeweils von einer Zug-Einlassöffnung (18, 20) zu einer Zug-Auslassöffnung (24, 26) erstreckenden Zügen (28, 34),
**dadurch gekennzeichnet, dass**
sich die Züge (28, 34) im Rohrinneren kreuzen.

2. Fahrrad-Rahmenrohr nach Anspruch 1, **dadurch gekennzeichnet, dass** der Abstand der Zug-Einlassöffnungen (18, 20) größer ist als der Abstand der Zug-Auslassöffnungen (24, 26).

3. Fahrrad-Rahmenrohr nach Anspruch 1 oder 2, **dadurch gekennzeichnet, dass** die Zug-Einlassöffnungen (18, 20) einander gegenüberliegend an Außenseiten (22) des Oberrohrs oder des Unterrohrs (10) angeordnet sind.

4. Fahrrad-Rahmenrohr nach einem der Ansprüche 1 bis 3, **dadurch gekennzeichnet, dass** die Zug-Auslassöffnungen (24, 26) an einer Unterseite des Unterrohrs oder an Außenseiten des Oberrohrs angeordnet sind.

5. Fahrrad-Rahmenrohr nach einem der Ansprüche 1 bis 4, **gekennzeichnet durch** Zughüllenaufnahmen (42) an den Zug-Einlassöffnungen (18, 20) zur Aufnahme von Zughüllen (30, 38).

6. Fahrrad-Rahmenrohr nach einem der Ansprüche 1 bis 5, **gekennzeichnet durch** jeweils eine Zug-Einlassöffnung (18, 20) mit einer diagonal gegenüberliegenden Zug-Auslassöffnung (24, 26) verbindenden Einführröhrchen.

7. Fahrrad-Rahmenrohr nach einem der Ansprüche 1 bis 6, **dadurch gekennzeichnet, dass** einer der beiden Züge (28, 34) im Fahrbetrieb gespannt ist.

8. Fahrrad-Rahmenrohr nach Anspruch 7, **dadurch gekennzeichnet, dass** der gespannte Zug (34) der untere der beiden Züge (28, 34) ist.

9. Fahrrad-Rahmenrohr nach Anspruch 7 oder 8, **dadurch gekennzeichnet, dass** der gespannte Zug (34) ein Umwerfer-Zug ist.

10. Fahrrad-Rahmenrohr nach einem der Ansprüche 7 bis 9, **dadurch gekennzeichnet, dass** der zweite Zug (28) ein Schaltwerk-Zug ist.

11. Fahrrad-Rahmenrohr nach einem der Ansprüche 1 bis 10, **dadurch gekennzeichnet, dass** der mit einem in Fahrtrichtung (44) linken Bedienelement verbundene Zug (34) in eine in Fahrtrichtung rechte Zug-Einlassöffnung (18) geführt ist.

12. Fahrrad-Rahmenrohr nach einem der Ansprüche 1 bis 11, **dadurch gekennzeichnet, dass** der mit einem in Fahrtrichtung (44) rechten Bedienelement verbundene Zug (28) in eine in Fahrtrichtung linke Zug-Einlassöffnung (20) geführt ist.

## Claims

1. A bicycle frame tube, in particular an upper tube or a down tube (10), comprising
at least two cable entry openings (18, 20),
at least two cable exit openings (24, 26), and
at least two cables (28, 34) respectively extending from a cable entry opening (18, 20) to a cable exit opening (24, 26),
**characterized in that**
the cables (28, 34) cross inside the tube.

2. The bicycle frame tube of claim 1, **characterized in that** the distance between the cable entry openings (18, 20) is larger than the distance between the cable exit openings (24, 26).

3. The bicycle frame tube of claim 1 or 2, **characterized in that** the cable entry openings (18, 20) are arranged opposite each other on outer sides (22) of the upper tube or the down tube (10).

4. The bicycle frame tube of claim 1 to 3, **characterized in that** the cable exit openings (24, 26) are arranged on a bottom side of the down tube or on outer sides of the upper tube.

5. The bicycle frame tube of claim 1 to 4, **characterized by** cable sleeve holders (42) at the cable entry openings (18, 20) for receiving cable sleeves (30, 38).

6. The bicycle frame tube of claim 1 to 5, **characterized by** insertion tubes respectively connecting a cable entry opening (18, 20) with a diagonally opposite cable exit opening (24, 26).

7. The bicycle frame tube of claim 1 to 6, **characterized in that** one of the two cables (28, 34) is tensioned during driving.

8. The bicycle frame tube of claim 7, **characterized in that** the tensioned cable (34) is the lower of the two cables (28, 34).

9. The bicycle frame tube of claim 7 or 8, **characterized in that** the tensioned cable (34) is a front derailleur cable.

10. The bicycle frame tube of one of claims 7 to 9, **characterized in that** the second cable (28) is a rear derailleur cable.

11. The bicycle frame tube of one of claims 1 to 10, **characterized in that** the cable (34) connected to a left operating element, seen in the traveling direction (44), is guided into a right cable entry opening (18), seen in the traveling direction.

12. The bicycle frame tube of one of claims 1 to 11, **characterized in that** the cable (28) connected to a right operating element, seen in the traveling direction (44), is guided into a left cable entry opening (20), seen in the traveling direction.

## Revendications

1. Tube de cadre de bicyclette, notamment tube horizontal ou tube diagonal (10), comprenant
au moins deux ouvertures d'entrée de câble (18, 20),
au moins deux ouvertures de sortie de câble (24, 26), et
au moins deux câbles (28, 34) s'étendant respectivement à partir d'une ouverture d'entrée de câble (18, 20) jusqu'à une ouverture de sortie de câble (24, 26),
**caractérisé en ce que**
lesdites câbles (28, 34) se croisent dans l'intérieur du tube.

2. Tube de cadre de bicyclette selon la revendication 1, **caractérisé en ce que** la distance entre les ouvertures d'entrée de câble (18, 20) est plus grande que la distance entre les ouvertures de sortie de câble (24, 26).

3. Tube de cadre de bicyclette selon la revendication 1 ou 2, **caractérisé en** e que les ouvertures d'entrée de câble (18, 20) sont disposées en opposition sur les côtés extérieurs (22) du tube horizontal ou du tube diagonal (10).

4. Tube de cadre de bicyclette selon l'une quelconque des revendications 1 à 3, **caractérisé en ce que** les ouvertures de sortie de câble (24, 26) sont disposées en sous face du tube diagonal ou sur les côtés extérieurs du tube horizontal.

5. Tube de cadre de bicyclette selon l'une quelconque des revendications 1 à 4, **caractérisé par** logements de gaine de câble (42) prévus aux ouvertures d'entrée de câble (18, 20) pour recevoir des gaines de câble (30, 38).

6. Tube de cadre de bicyclette selon l'une quelconque des revendications 1 à 5, **caractérisé par** une tubulure d'insertion respectivement liant une ouverture d'entrée de câble (18, 20) à une ouverture de sortie de câble (24, 26) diagonalement opposée.

7. Tube de cadre de bicyclette selon l'une quelconque des revendications 1 à 6, **caractérisé en ce que** l'un des deux câbles (28, 34) est tendu lorsque la bicyclette est en service.

8. Tube de cadre de bicyclette selon la revendication 7, **caractérisé en ce que** le câble tendu (34) est le câble inférieur des deux câbles (28, 34).

9. Tube de cadre de bicyclette selon la revendication 7 ou 8, **caractérisé en ce que** le câble tendu (34) est un câble de dérailleur avant.

10. Tube de cadre de bicyclette selon l'une quelconque des revendications 7 à 9, **caractérisé en ce que** le câble tendu (28) est un câble de dérailleur arrière.

11. Tube de cadre de bicyclette selon l'une quelconque des revendications 1 à 10, **caractérisé en ce que** le câble (34) connecté à un actionneur gauche, vu dans la direction de mouvement (44), est guidé dans une ouverture d'entrée de câble (18) droite, vu dans la direction de mouvement.

12. Tube de cadre de bicyclette selon l'une quelconque des revendications 1 à 11, **caractérisé en ce que** le câble (28) connecté à un actionneur droite, vu dans la direction de mouvement (44), est guidé dans une ouverture d'entrée de câble (20) gauche, vu dans la direction de mouvement.
